(11)　**EP 3 376 176 B1**

(12)　## EUROPÄISCHE PATENTSCHRIFT

(45) Veröffentlichungstag und Bekanntmachung des
Hinweises auf die Patenterteilung:
**28.02.2024　Patentblatt 2024/09**

(21) Anmeldenummer: **18160483.6**

(22) Anmeldetag: **07.03.2018**

(51) Internationale Patentklassifikation (IPC):
***G01F 1/58*** *(2006.01)*

(52) Gemeinsame Patentklassifikation (CPC):
**G01F 1/58**

(54) **VERFAHREN ZUR BESTIMMUNG DES STRÖMUNGSPROFILS, MESSWERTUMFORMER, MAGNETISCH-INDUKTIVES DURCHFLUSSMESSGERÄT UND VERWENDUNG EINES MAGNETISCH-INDUKTIVEN DURCHFLUSSMESSGERÄTS**

METHOD FOR DETERMINING THE FLOW PROFILE, MEASURING TRANSDUCER,
MAGNETIC-INDUCTIVE FLOW MEASURING APPARATUS AND USE OF A MAGNETIC-INDUCTIVE
FLOW MEASURING APPARATUS

PROCÉDÉ DE DÉTERMINATION DE PROFILÉ D'ÉCOULEMENT, TRANSDUCTEUR, DÉBITMÈTRE
À INDUCTION MAGNÉTIQUE ET UTILISATION D'UN DÉBITMÈTRE À INDUCTION MAGNÉTIQUE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **15.03.2017　DE 102017105547**

(43) Veröffentlichungstag der Anmeldung:
**19.09.2018　Patentblatt 2018/38**

(73) Patentinhaber: **Krohne AG**
**4019 Basel (CH)**

(72) Erfinder: **BOS, Maarten Hijbrand**
**3331 Zwijndrecht (NL)**

(74) Vertreter: **Gesthuysen Patentanwälte
Partnerschaftsgesellschaft mbB
Huyssenallee 68
45128 Essen (DE)**

(56) Entgegenhaltungen:
**EP-A1- 3 184 969　　WO-A1-2016/142128
DE-A1- 10 244 646　　DE-A1-102007 053 222
DE-C1- 10 214 323　　US-A1- 2014 083 199
US-A1- 2020 166 392**

EP 3 376 176 B1

**Beschreibung**

Die Erfindung geht aus von einem Verfahren zur Bestimmung des Strömungsprofils im Messrohr eines magnetisch-induktiven Durchflussmessgeräts, wobei das Durchflussmessgerät wenigstens einen Messwertumformer und wenigstens einen Messwertaufnehmer aufweist, wobei der Messwertaufnehmer wenigstens ein Messrohr, wenigstens eine erste Spule zur Erzeugung eines ersten Magnetfeldes innerhalb des Messrohrs, wenigstens eine zweite Spule zur Erzeugung eines zweiten Magnetfeldes innerhalb des Messrohrs, wenigstens eine erste Elektrode und wenigstens eine zweite Elektrode aufweist, wobei die erste Elektrode und die zweite Elektrode zur Messung einer in dem Fluid auftretenden Spannung vorzugsweise diametral an dem Messrohr angeordnet sind, und wobei der Messwertumformer wenigstens eine Steuer- und Auswerteeinheit aufweist.

Zudem betrifft die Erfindung einen Messwertumformer zur Verbindung mit einem Messwertaufnehmer eines magnetisch-induktiven Durchflussmessgeräts, umfassend eine Steuer- und Auswerteeinheit.

Darüber hinaus geht die Erfindung aus von einem magnetisch-induktiven Durchflussmessgerät mit wenigstens einem Messwertumformer und wenigstens einem Messwertaufnehmer, wobei der Messwertaufnehmer wenigstens ein Messrohr, wenigstens eine erste Spule zur Erzeugung eines ersten Magnetfeldes innerhalb des Messrohrs, wenigstens eine zweite Spule zur Erzeugung eines zweiten Magnetfeldes innerhalb des Messrohrs, wenigstens eine erste Elektrode und wenigstens eine zweite Elektrode aufweist, wobei die erste Elektrode und die zweite Elektrode zur Messung einer in dem Fluid auftretenden Spannung an dem Messrohr angeordnet sind, und wobei der Messwertumformer wenigstens eine Steuer- und Auswerteeinheit aufweist.

Außerdem betrifft die Erfindung die Verwendung eines magnetisch-induktiven Durchflussmessgeräts zur Bestimmung des Strömungsprofils eines durch ein Messrohr strömenden Fluids, wobei das Durchflussmessgerät wenigstens einen Messwertumformer und wenigstens einen Messwertaufnehmer aufweist, wobei der Messwertaufnehmer wenigstens ein Messrohr, wenigstens eine erste Spule zur Erzeugung eines ersten Magnetfeldes innerhalb des Messrohrs, wenigstens eine zweite Spule zur Erzeugung eines zweiten Magnetfeldes innerhalb des Messrohrs, wenigstens eine erste Elektrode und wenigstens eine zweite Elektrode aufweist, wobei die erste Elektrode und die zweite Elektrode zur Messung einer in dem Fluid auftretenden Spannung an dem Messrohr angeordnet sind, und wobei der Messwertumformer wenigstens eine Steuer- und Auswerteeinheit aufweist.

Aus dem Stand der Technik ist die Bestimmung des Durchflusses eines durch ein Messrohr strömenden Mediums mittels eines magnetisch-induktiven Durchflussmessgeräts bekannt. Ein solches Durchflussmessgerät nutzt das Prinzip der elektromagnetischen Induktion zur Bestimmung der Strömungsgeschwindigkeit des Mediums. Dazu weist ein magnetisch-induktives Durchflussmessgerät in der Regel wenigstens zwei stromdurchflossene Spulen auf, die derart an dem Messrohr angeordnet sind, dass sie im Betrieb ein Magnetfeld innerhalb des Messrohrs erzeugen, das wenigstens eine Komponente aufweist, die senkrecht zur Strömungsrichtung verläuft. Aufgrund der Ablenkung der in dem Fluid vorhandenen geladenen Teilchen entsteht innerhalb des Fluids eine Spannung, die sich mittels an dem Messrohr angeordneten Elektroden nachweisen lässt. Aus der gemessenen Spannung lässt sich die Geschwindigkeit, mit der das Fluid durch das Messrohr fließt, bestimmen.

Dabei wird grundlegend davon ausgegangen, dass die Geschwindigkeitsverteilung des Strömungsprofils des Fluids ungestört und damit symmetrisch ist.

Nach einer Biegung, einer Reduzierung oder Aufweitung des Messrohrs oder nach in das Messrohr hineinragenden Elementen kann das Strömungsprofil jedoch gestört sein. Eine solche Störung kann eine vertikale und/oder eine horizontale Asymmetrie des Strömungsprofils zu Folge haben. Wird im Bereich des gestörten Strömungsprofils die Geschwindigkeit des Fluids bestimmt und bleibt die Störung des Strömungsprofils unberücksichtigt, so ist auch die Bestimmung der Geschwindigkeit bzw. des daraus abgeleiteten Volumendurchflusses fehlerhaft.

Aus der Druckschrift EP 1 275 940 A2 ist es bekannt zur Überwachung des Strömungsprofils mit einem magnetisch-induktiven Durchflussmessgerät zeitweise ein bezüglich der Messrohrlängsachse signifikant asymmetrisches Magnetfeld zu erzeugen, die zwischen den Elektroden abfallende Spannung zu messen und mit den entsprechenden Werten, auf die das Durchflussmessgerät kalibriert ist, zu vergleichen. Eine Abweichung vom kalibrierten Normal weist dabei auf eine Störung des Strömungsprofils hin.

Das Dokument EP 0 641 999 A1 betrifft ein Verfahren zur Bestimmung der Strömungsgeschwindigkeit eines Fluids mit einem magnetisch-induktiven Durchflussmessgerät, wobei eine Korrekturfunktion vorgesehen ist, die die bei gleichsinnigen Magnetfeldern der Geschwindigkeit des Fluids nur ungefähr proportionale Spannung zwischen den Elektroden zu einem der Geschwindigkeit des Fluids proportionalen Ausgangssignal korrigiert, wobei die Korrekturfunktion beispielsweise durch den Quotienten aus der den gegensinnigen Magnetfeldern entsprechenden Spannung und der den gleichsinnigen Magnetfeldern entsprechenden Spannung gebildet wird. Im Detail wird zwischen einer Korrekturfunktion für eine strömende Bewegung des Fluids und für eine schießende Bewegung des Fluids unterschieden.

Die europäische Patentanmeldung EP 0 770 855 A1 offenbart ein Verfahren zur Messung der mittleren Fließgeschwindigkeit einer in einem Messrohr fließenden Flüssigkeit mit einem magnetisch-induktiven Durchflussmessgerät, wobei die Spulen zur Erzeugung eines Magnetfeldes sowohl gleich- als auch gegensinnig bestromt werden und wobei aus der bei gegensinniger Bestromung zwischen den Elektroden abgegriffene Spannung und der bei gleichsinnig bestromten Elektroden abgegriffenen Spannung der Fließindex der Flüssigkeit, der die Abweichung vom newtonschen Verhalten charakterisiert, bestimmt wird.

Das Dokument WO 2016/142128 A1 zeigt ein Verfahren zur Bestimmung einer Assymetrie des Strömungsprofils.

Grundsätzlich ist es somit aus dem Stand der Technik bekannt, Störungen des symmetrischen Strömungsprofils zu detektieren.

Ausgehend von diesem Stand der Technik ist es Aufgabe der vorliegenden Erfindung ein Verfahren anzugeben, mit dem das Strömungsprofil des durch ein Messrohr strömenden Fluids besonders genau bestimmt werden kann. Darüber hinaus ist es Aufgabe der Erfindung einen Messumformer und ein entsprechendes magnetisch-induktives Durchflussmessgerät anzugeben, sowie die Verwendung eines magnetisch-induktiven Durchflussmessgeräts zur Bestimmung des Strömungsprofils eines durch ein Messrohr strömenden Fluids.

Gemäß einer ersten Lehre der vorliegenden Erfindung wird die zuvor genannte Aufgabe durch ein eingangs genanntes Verfahren dadurch gelöst, dass ein Mittel zum Erzeugen eines Referenzpotenzials vorhanden ist, und dass das Verfahren die folgenden Schritte umfasst:

- Bestromen der ersten Spule zur Erzeugung eines ersten Magnetfeldes mit einem ersten Erregerstrom,

- Bestromen der zweiten Spule zur Erzeugung eines zweiten Magnetfeldes mit einem zweiten Erregerstrom,

- Messung einer ersten Spannung $E_1$ an der ersten Elektrode gegen das Referenzpotenzial,

- Messung einer zweiten Spannung $E_2$ an der zweiten Elektrode gegen das Referenzpotenzial,

- Bestimmung der vertikalen und/oder horizontalen Asymmetrie des Strömungsprofils aus dem ersten Spannungsmesswert $E_1$ und aus dem zweiten Spannungsmesswert $E_2$.

Erfindungsgemäß wurde erkannt, dass das Strömungsprofil des Fluids in einem Messrohr eines magnetisch-induktiven Durchflussmessgeräts besonders genau bestimmt werden kann, wenn die in einzelnen Teilbereichen des Messrohrs bzw. des Strömungsquerschnitts abfallende Spannung gesondert gegen ein Referenzpotenzial gemessen wird. Die in einzelnen Teilbereichen abfallende Spannung ist insbesondere abhängig von dem Magnetfeld innerhalb des Messrohrs sowie von der Geschwindigkeitsverteilung des Fluids an der Messstelle. Durch Variation des Magnetfeldes innerhalb des Messrohrs bzw. der durch die einzelnen Spulen erzeugten Magnetfelder lassen sich, wie weiter unten näher erläutert wird, verschiedene Messzustände erzeugen. Durch die gesonderte Messung der Spannungen $E_1$ und $E_2$ an jeder Elektrode in den verschiedenen Messzuständen lässt sich das Strömungsprofil in den einzelnen Teilbereichen durch die Auswirkung unterschiedlicher Magnetfelder charakterisieren.

Gemäß einer Ausgestaltung weisen der erste und der zweite Erregerstrom die gleiche Stromstärke auf, sodass das erste Magnetfeld und das zweite Magnetfeld innerhalb des Messrohre symmetrisch ausgebildet sind. Die erste und die zweite Spule sind in insbesondere in Reihe geschaltet. Alternativ kann die Bestromung auch unabhängig voneinander durch getrennte Stromkreise erfolgen. Denkbar ist ebenfalls, dass die Erregerströme unterschiedliche Stromstärken aufweisen.

Das Referenzpotenzial weist vorzugsweise ein Massepotential auf und ist als Referenzelektrode oder als Erdungsring ausgestaltet. Die erste und die zweite Elektrode sind erfindungsgemäß diametral derart angeordnet, dass die Verbindungslinie der Elektroden senkrecht in Bezug auf ein von den Spulen erzeugtes gleichsinniges Magnetfeld zur Bestimmung der Strömungsgeschwindigkeit des Fluids angeordnet ist. Das Mittel zur Erzeugung des Referenzpotenzials ist vorzugsweise in einem Winkel von ca. 90° zu den Elektroden angeordnet. Diese Ausgestaltung weist den Vorteil auf, dass je nach Ausbildung des Magnetfeldes sowohl eine vertikale als auch eine horizontale Asymmetrie des Strömungsprofils bestimmbar ist.

Gemäß einer weiteren vorteilhaften Ausgestaltung werden die erste und die zweite Spule derart bestromt, dass das erste Magnetfeld und das zweite Magnetfeld gleichgerichtet sind, wobei die Bestimmung der horizontalen Asymmetrie des Strömungsprofils aus dem Vergleich des ersten Spannungsmesswertes $E_1$ und des zweiten Spannungsmesswertes $E_2$ erfolgt. Insbesondere wenn die Elektroden und das Mittel zur Erzeugung eines Referenzpotenzials wie zuvor beschrieben angeordnet sind, kann mit dieser Ausgestaltung des Verfahrens eine horizontale Asymmetrie des Strömungsprofils besonders leicht bestimmt werden. Dabei ist der Spannungsmesswert $E_1$ ein Maß für die Ablenkung der geladenen Teilchen beispielsweise in der linken Hälfte des Messrohr, während der Spannungsmesswert $E_2$ ein Maß für die Ablenkung der geladenen Teilchen beispielsweise in der rechten Hälfte des Messrohrs ist. Dabei unterscheiden sich $E_1$ und $E_2$ im Vorzeichen. Der Betrag der Spannungsmesswerte $E_1$ und $E_2$ ist insofern jeweils ein Maß für die Geschwindigkeit des Fluids beispielsweise in der rechten und der linken Hälfte des Messrohrs. Besonders bevorzugt wird aus den

gemessenen Spannungsmesswerten $E_1$ und $E_2$ die Strömungsgeschwindigkeit des Fluids bestimmt. Zur Beurteilung, ob eine horizontale Asymmetrie des Strömungsprofils vorliegt, werden die Spannungen $E_1$ und $E_2$, insbesondere die Beträge der Spannungen $E_1$ und $E_2$ beispielsweise durch Bildung eines Quotienten oder durch Summen- oder Differenzbildung miteinander verglichen. Weicht der Vergleich der Spannungen von einem zuvor festgelegten Grenzwert ab, so ist dies auf eine horizontale Asymmetrie des Strömungsgprofils zurückzuführen. Vorzugsweise weist das Strömungsprofil dann eine asymmetrische Störung auf wenn die Abweichung von dem Grenzwert außerhalb eines Toleranzbereiches um den Grenzwert liegt. Der Toleranzbereich beträgt in einer bevorzugten Ausgestaltung 10% des Grenzwertes, in einer besonders bevorzugten Ausgestaltung 5% des Grenzwertes und in einer weiteren besonders bevorzugten Ausgestaltung 2% des Grenzwertes. Dabei ist die Asymmetrie umso größer, je höher die Abweichung von dem Grenzwert ist.

Gemäß einer weiteren vorteilhafte Ausgestaltung werden die erste und die zweite Spule alternativ oder zeitlich vor oder nach der Erzeugung von gleichgerichteten Magnetfeldern derart bestromt, dass das erste und das zweite Magnetfeld einander entgegengerichtet sind, wobei die Bestimmung der Asymmetrie des Strömungsprofils aus dem ersten Spannungsmesswert $E_1$ und dem zweiten Spannungsmesswert $E_2$ erfolgt. Insbesondere wenn die Elektroden und das Mittel zur Erzeugung eines Referenzpotenzials wie zuvor beschrieben angeordnet sind, kann mit dieser Ausgestaltung des Verfahrens eine vertikale Asymmetrie in jeder Hälfte des Strömungsprofils besonders leicht bestimmt werden.

Ist die erste Elektrode an der linken Hälfte des Messrohrs angeordnet und die zweite Elektrode an der rechten Hälfte des Messrohrs angeordnet, werden wie bereits zuvor beschrieben, zunächst die in der linken Hälfte anfallende Spannung $E_1$ und die in der rechten Hälfte des Messrohrs anfallende Spannung $E_2$ bestimmt.

Ist das vertikale Strömungsprofil in der rechten bzw. in der linken Hälfte des Messrohrs symmetrisch, so beträgt die Spannung $E_1$ bzw. $E_2$ 0V. Ist das Strömungsprofil beispielsweise in der linken Hälfte des Messrohrs vertikal nicht symmetrisch, so ist $E_1 \neq 0$ V. Ist das Strömungsprofil in der rechten Hälfte des Messrohrs vertikal nicht symmetrisch, so ist $E_2 \neq 0$ V. Ist der Betrag von $E_1$ und $E_2$ gleich groß, so ist die vertikale Asymmetrie auf beiden Seiten des Messrohrs im Mittel identisch. Ist jedoch der Betrag der gemessenen Spannungen unterschiedlich, d.h. $|E_1| \neq |E_2|$, weist das Strömungsprofil auf beiden Seiten eine vertikale Asymmetrie und zusätzlich eine horizontale Asymmetrie auf.

Gemäß einer besonders bevorzugten Ausgestaltung werden in einem ersten Messzustand $M_1$ die erste und die zweite Spule derart bestromt, dass das erste und das zweite Magnetfeld gleichgerichtet sind, wobei zumindest der erste Spannungsmesswert $E_1$ und der zweite Spannungsmesswert $E_2$ bestimmt werden und in einem zweiten Messzustand $M_2$ werden die erste und die zweite Spule derart bestromt, dass das erste und das zweite Magnetfeld einander entgegengerichtet sind, wobei zumindest der erste Spannungsmesswert $E_1$ und der zweite Spannungsmesswert $E_2$ bestimmt werden und die Bestimmung der vertikalen und der horizontalen Asymmetrie erfolgt aus den im ersten Messzustand bestimmten Spannungsmesswerten $E_1$ und $E_2$ und aus den im zweiten Messzustand bestimmten Spannungsmesswerten $E_1$ und $E_2$. Besonders bevorzugt sind dieser Ausgestaltung die erste und die zweite Elektrode und das Mittel zur Erzeugung eines Referenzpotenzials wie zuvor beschrieben angeordnet.

Anschaulich lässt sich das Strömungsprofil in vier Quadranten einteilen, wobei mittels der zuvor beschrieben Ausgestaltung sowohl eine vertikale Asymmetrie innerhalb der rechten und der linken Hälfte bestimmt werden kann als auch eine horizontale Asymmetrie zwischen der rechten und der linken Hälfte. Dazu werden insbesondere die in dem ersten Messzustand $M_1$ gemessenen Spannungsmesswerte $E_1$ und $E_2$ und die in dem zweiten Messzustand $M_2$ gemessenen Spannungsmesswerte $E_1$ und $E_2$ gemeinsam ausgewertet. Es wird insbesondere der Betrag des Quotienten

$$Q_{M1} = \left| \frac{E_1}{E_2} \right|$$

der in dem ersten Messzustand $M_1$ gemessenen Spannungsmesswerten und der Betrag des Quotienten

$$Q_{M2} = \left| \frac{E_1}{E_2} \right|$$

der in dem zweiten Messzustand $M_2$ gemessenen Spannungsmesswerten gebildet.

Ist $Q_{M1} = 1$, so weist das Strömungsprofil im Mittel keine horizontale Asymmetrie insbesondere zwischen der rechten und der linken Messrohrhälfte auf. Ist $Q_{M1} \neq 1$, so weist das Strömungsprofil eine horizontale Asymmetrie auf.

Ist $Q_{M2} = 1$, so weist das Strömungsprofil eine vertikale Asymmetrie insbesondere zwischen der oberen und der unteren Messrohrhälfte auf. Ist $Q_{M2} \neq 1$, so weist das Strömungsprofil eine vertikale und eine horizontale Asymmetrie auf.

Zudem kann aus der Auswertung der im zweiten Messzustand $M_2$ gemessenen Spannungsmesswerte $E_1$ und $E_2$ eine Information bezüglich der vertikalen Asymmetrie in jeder Hälfte gewonnen werden.

So lässt sich insgesamt das Strömungsprofil innerhalb jedes der vier Quadranten zumindest qualitativ bestimmen.

Besonders bevorzugt wird zudem aus den im ersten Messzustand $M_1$ gemessenen Spannungsmesswerten

E$_1$ und E$_2$ zusätzlich die Strömungsgeschwindigkeit des Fluids bestimmt. Besonders bevorzugt wird bei der Bestimmung des Durchflusses aus der Strömungsgeschwindigkeit ebenfalls das gemessene Strömungsprofil berücksichtigt.

Gemäß einer weiteren vorteilhaften Ausgestaltung werden in einem zusätzlichen Messzustand die erste und die zweite Spule derart bestromt, dass das Magnetfeld jeder Spule invertiert wird, wobei zumindest der erste Spannungsmesswert E$_1$ und der zweite Spannungsmesswert E$_2$ bestimmt werden und wobei der erste Spannungsmesswert E$_1$ und der zweite Spannungsmesswert E$_2$ bei der Bestimmung der vertikalen und/oder horizontalen Asymmetrie des Strömungsprofils berücksichtigt werden.

Diese Ausgestaltung ist insbesondere vorteilhaft, wenn in einem ersten Messzustand M$_1$ die erste und die zweite Spule derart bestromt werden, dass das erste Magnetfeld und das zweite Magnetfeld gleichgerichtet sind, wenn in einem zweiten Messzustand M$_2$ die erste und die zweite Spule derart bestromt werden, dass das erste und das zweite Magnetfeld einander entgegengerichtet sind und wenn in einem dritten Messzustand M$_3$ die erste und die zweite Spule umgekehrt zum zweiten Messzustand M$_2$ derart bestromt werden, dass das erste und das zweite Magnetfeld gegensinnig zueinander ausgerichtet sind, jedoch umgekehrt bezüglich des zweiten Messzustandes M$_2$. Zudem werden in jedem Messzustand M$_1$, M$_2$ und M$_3$ die Spannungsmesswerte E$_1$ und E$_2$ an der ersten und der zweiten Elektrode bestimmt.

Durch die zusätzliche Berücksichtigung des umgekehrten gegensinnigen Magnetfeldes lässt sich eine weitere Differenzierung der möglichen Strömungsprofile vornehmen.

Gemäß einer weiteren vorteilhaften Ausgestaltung wird aus den bei gleichgerichteten Magnetfeldern gemessenen Spannungsmesswerten E$_1$ und E$_2$ zusätzlich die Strömungsgeschwindigkeit des Mediums bestimmt.

Es ist vorteilhaft, wenn in der Auswerteeinheit eine Mehrzahl von Strömungsprofilen in Form von verschiedenen Spannungsverhältnissen zwischen der ersten und der zweiten Elektrode, insbesondere unter Berücksichtigung verschiedener Messzustände, hinterlegt ist und wenn die Bestimmung der vertikalen und/oder horizontalen Asymmetrie des Strömungsprofils mittels einer Abfrage bezüglich dieser Spannungsverhältnisse erfolgt.

Beispielsweise können qualitativ die folgenden tabellarisch aufgeführten Arten von Strömungsprofilen unterschieden, wobei Q1 bis Q4 jeweils einen Quadranten des Strömungsprofils bezeichnet, und wobei im Einzelnen Q1 links oben, Q2 rechts oben, Q3 links unten und Q4 rechts unten angeordnet sind:

| Typ | Q1 | Q2 | Q3 | Q4 |
|-----|----|----|----|----|
| A | normal | normal | normal | normal |
| B | schnell | schnell | langsam | langsam |
| C | schnell | langsam | schnell | langsam |
| D | schnell | langsam | langsam | langsam |
| E | schnell | langsam | langsam | schnell |
| F | langsam | normal | normal | normal |

Die einzelnen Typen A bis F des Strömungsprofils weisen im ersten Messzustand M$_1$ folgende Spannungsmesswerte E$_1$ und E$_2$ auf:

| Typ | Differential | $|E_1|$ | $|E_2|$ | $\left|\dfrac{E_1}{E_2}\right|$ | $|E_1 - E_2|$ |
|-----|------|------|------|------|------|
| A | E$_v$ | E$_v$/2 | E$_v$/2 | 1 | E$_v$ |
| B | E$_v$ | E$_v$/2 | E$_v$/2 | 1 | E$_v$ |
| C | E$_v$ | E$_v$/2 + Offset | E$_v$/2 - Offset | S$_l$/S$_r$ | E$_v$ |
| D | E$_v$ | E$_v$/2 + Offset | E$_v$/2 - Offset | S$_l$/S$_r$ | E$_v$ |
| E | E$_v$ | E$_v$/2 | E$_v$/2 | 1 | E$_v$ |
| F | E$_v$ | E$_v$/2 - Offset | E$_v$/2 | S$_l$/S$_r$ | E$_v$ |

Dabei entspricht die Ablenkung der geladenen Teilchen innerhalb der Fluids im ersten Messzustand M$_1$ der Ablenkung zur Bestimmung der Geschwindigkeit v des Fluids. Demnach lassen sich die Spannungsmesswerte E$_1$ und E$_2$ mit dem

für die Durchflussmessung relevanten Messwert $E_v$ vergleichen.

In der obige Tabelle entspricht das Differenzial der Potenzialdifferenz zwischen der ersten und der zweiten Elektrode. Die Angabe $E_v$ bezeichnet den Spannungsmesswert zur Bestimmung der Durchflussgeschwindigkeit v des strömenden Fluids. Weicht der angegebene Messwert für $E_1$ bzw. $E_2$ um einen Offset nach oben oder nach unten von dem (halben) Messwert für die Durchflussbestimmung $E_v$ ab, so ist dies zurückzuführen auf eine von der normalen Durchflussgeschwindigkeit abweichende schnelle oder langsame Fließgeschwindigkeit. Insbesondere die in der fünften Spalte angegebenen Werte für den Quotienten $E_1/E_2$ weisen auf eine horizontale Asymmetrie zwischen der linken und der rechten Messrohrhälfte hin. In den Fällen in denen im Mittel keine horizontale Asymmetrie vorliegt, also bei den

$$\left| \frac{E_1}{E_2} \right| = 1$$

Strömungsprofiltypen A, B und E, ist . Weist das Strömungsprofil im Mittel unterschiedliche Geschwindigkeiten und damit betragsmäßig unterschiedliche Spannungsmesswerte in der rechten und in der linken Messrohrhälfte

$$\left| \frac{E_1}{E_2} \right|$$

auf, so ist ein Maß für die Asymmetrie zwischen dem linken Strömungsprofil $S_1$ und dem rechten Strömungsprofil $S_r$.

Im zweiten Messzustand $M_2$ ergeben sich für die genannten Strömungsprofiltypen folgende Werte:

| Typ | Differential | $|E_1|$ | $|E_2|$ | $\left\| \dfrac{E_1}{E_2} \right\|$ | $|E_1 - E_2|$ |
|---|---|---|---|---|---|
| A | 0 | 0 | 0 | 1 | 0 |
| B | Offset-2 | Offset | Offset | $S_o/S_u$ | Offset.2 |
| C | 0 | 0 | 0 | 1 | 0 |
| D | Offset | Offset | 0 | $S_o/S_u$ | Offset |
| E | 0 | Offset | Offset | 1 | 0 |
| F | Offset | Offset | 0 | $S_o/S_u$ | Offset |

Da die Ablenkung der geladenen Teilchen im Fluid in dem zweiten Messzustand $M_2$ aufgrund der gegensinnig wirkenden Magnetfelder von der Richtung der Ablenkung der Teilchen zur Messung der Durchflussgeschwindigkeit abweicht, kann den in dem zweiten Messzustand $M_2$ bestimmten Spannungsmesswerten $E_1$ und $E_2$ keine Information bezüglich der Durchflussgeschwindigkeit v entnommen werden. Vielmehr wird in dem zweiten Messzustand $M_2$ nur dann eine Spannung $E_1$ und/oder $E_2$ in der linken bzw. der rechten Messrohrhälfte gemessen, wenn in der linken bzw. in der rechten Messrohrhälfte ein vertikal asymmetrisches Strömungsprofil vorliegt. Ist das vertikale Strömungsprofil im Hinblick auf die Strömungsgeschwindigkeit in einer Messrohrhälfte symmetrisch, ist an der Elektrode keine Spannung

$$\left| \frac{E_1}{E_2} \right|$$

messbar. In der zuvor gezeigten Tabelle ist das Verhältnis damit ein Maß für die Asymmetrie zwischen dem oberen Strömungsprofil $S_o$ und dem unteren Strömungsprofil $S_u$.

Eine Umkehr der Richtung der Erregerströme in einem dritten Messzustand $M_3$ bewirkt eine Vorzeichenumkehr der gemessenen Spannungen.

Durch Messung der Spannungen $E_1$ und $E_2$ in dem ersten Messzustand $M_1$ und in dem zweiten Messzustand $M_2$ und vorzugsweise auch dem dritten Messzustand $M_3$ kann dem Fluid damit einer der oben dargelegten Strömungsprofiltypen A bis F zugeordnet werden.

Vorzugsweise ist dazu in der Auswerteeinheit der folgende Algorithmus hinterlegt:

- Measure M1

- quotient_1 = E1/E2

• Measure M2

- E1 _2 = E1
- E2_2 = E2
- quotient_2 = E1/E2
- sum_2 = E1 + E2
- delta_2 = E1 - E2

• Measure M2 with reversed magnetic field

- sum_2_rev = E1 + E2

• If (quotient_2 = 1) AND (quotient_1 = 1) then

- If (sum_2 = sum_2_rev) then FLOWPROFILE A
- If (sum_2 ≠ sum_2_rev) then FLOWPROFILE_E

• If not(FLOWPROFILE A) or not(FLOWPROFILE E) and (quotient_1=1) then FLOWPROFILE_B
• If not(FLOWPROFILE A or FLOWPROFILE E or FLOWPROFILE B) and (quotient_2=1) then FLOWPROFILE_C

Sofern nicht einer der Strömungsprofiltypen A, B, C oder E detektiert wird, so liegt ein Strömungsprofil vor, in dem ein Quadrant eine signifikant höhere oder niedrigere Geschwindigkeit als die übrigen drei Quadranten aufweist (Strömungsprofiltyp D oder F).
Folgender Algorithmus kann beispielsweise zur weiteren Identifizierung des Strömungsprofiltyps eingesetzt werden:

• If (E2_2 = 0) and (E1_2 > 0) and (quotient_1 = "left part") then FLOWPROFILE D_Q1_fast
• If (E2_2 = 0) and (E1_2 < 0) and (quotient_1 = "left part") then FLOWPROFILE_D_Q3_fast
• If (E1_2 = 0) and (E2_2 > 0) and (quotient_1 = "right part") then FLOWPROFILE_D_Q2_fast
• If (E1_2 = 0) and (E2_2 < 0) and (quotient_1 = "right part") then FLOWPROFILE_D_Q4_fast
• If (E2_2 = 0) and (E1_2 < 0) and (quotient_1 = "right part") then FLOWPROFILE_F_Q1_slow
• If (E2_2 = 0) and (E1_2 > 0) and (quotient_1 = "right part") then FLOWPROFILE_D_Q3_slow
• If (E1_2 = 0) and (E2_2 < 0) and (quotient_1 = "left part") then FLOWPROFILE_D_Q2_slow
• If (E1_2 = 0) and (E2_2 > 0) and (quotient_1 = "left part") then FLOWPROFILE_D_Q4_slow

Neben den zuvor beispielhaft beschriebenen konkreten Strömungsprofiltypen und dem Algorithmus zur Einordnung der Profiltypen anhand der gemessenen Spannungen lassen sich natürlich weitere Strömungsprofiltypen mit anderen Geschwindigkeitsverteilungen voneinander unterscheiden und insbesondere durch eine Messung der Spannungen $E_1$ und $E_2$ in verschiedenen Messzuständen klassifizieren.
Gemäß einer zweiten Lehre wird die eingangs dargelegte Aufgabe durch einen Messwertumformer zur Verbindung mit einem Messwertaufnehmer eines magnetisch-induktiven Durchflussmessgeräts, umfassend eine Steuer- und Auswerteeinheit, dadurch gelöst, dass die Steuer- und Auswerteeinheit zur Durchführung eines der zuvor beschriebenen Verfahrens ausgestaltet ist.
Gemäß einer dritten Lehre der vorliegenden Erfindung wird die eingangs dargelegte Aufgabe durch ein eingangs genanntes magnetisch-induktives Durchflussmessgerät dadurch gelöst, dass ein Mittel zum Erzeugen eines Referenzpotenzials vorhanden ist und dass die Auswerteeinheit derart ausgestaltet ist, dass sie im Betrieb aus den an den Elektroden gemessenen Spannungsmesswerten, wobei die Spannungsmesswerte jeweils gegen das Referenzpotenzial gemessen werden, die vertikale und/oder horizontale Asymmetrie des Strömungsprofils bestimmt.
Gemäß einer besonders bevorzugten Ausgestaltung führt das Durchflussmessgerät im Betrieb eines der zuvor beschriebenen Verfahren durch.
Gemäß einer vierten Lehre der vorliegenden Erfindung wird die eingangs dargelegte Aufgabe durch die eingangs genannte Verwendung ebenfalls dadurch gelöst, dass ein Mittel zum Erzeugen eines Referenzpotenzials vorhanden ist und dass die Auswerteeinheit derart ausgestaltet ist, dass sie im Betrieb aus den an den Elektroden gemessenen Spannungsmesswerten, wobei die Spannungsmesswerte jeweils gegen das Referenzpotenzial gemessen werden, die vertikale und/oder horizontale Asymmetrie des Strömungsprofils bestimmt.
Erfindungsgemäß wurde damit erkannt, dass ein magnetisch-induktives Durchflussmessgerät nicht nur für die Bestimmung des Durchflusses eingesetzt werden kann, sondern dass es ebenfalls möglich ist, horizontale und/oder vertikale Asymmetrien des Strömungsprofils zu bestimmen. Dadurch kann das Strömungsprofil bei der Bestimmung des Durchflussgeschwindigkeit berücksichtigt werden, wodurch die Zuverlässigkeit der Messung bzw. des Durchflussmessgeräts verbessert wird.

Gemäß einer bevorzugten Ausgestaltung ist das Durchflussmessgerät wie zuvor beschrieben ausgestaltet und/oder das Durchflussmessgerät führt im Betrieb eines der zuvor beschriebenen Verfahren durch.

Im Einzelnen gibt es nun eine Vielzahl von Möglichkeiten das erfindungsgemäße Verfahren, das erfindungsgemäße Durchflussmessgerät und die erfindungsgemäße Verwendung auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung.

In der Zeichnung zeigen

Fig. 1 ein erstes Ausführungsbeispiel eines erfindungsgemäße Verfahrens,

Fig. 2 ein zweites Ausführungsbeispiel eines erfindungsgemäßen Verfahrens,

Fig. 3 ein drittes Ausführungsbeispiel eines erfindungsgemäßen Verfahrens,

Fig. 4 ein viertes Ausführungsbeispiel eines erfindungsgemäßen Verfahrens,

Fig. 5 eine schematische Darstellung verschiedener Strömungsprofile des Fluids,

Fig. 6 ein erstes Ausführungsbeispiel einer erfindungsgemäßen Vorrichtung und

Fig. 7 ein zweites Ausführungsbeispiel einer erfindungsgemäßen Vorrichtung.

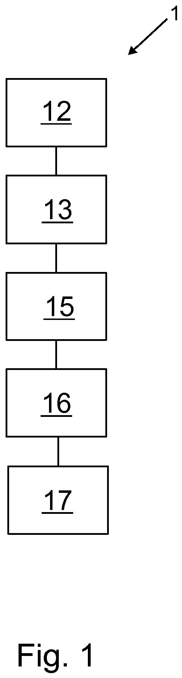

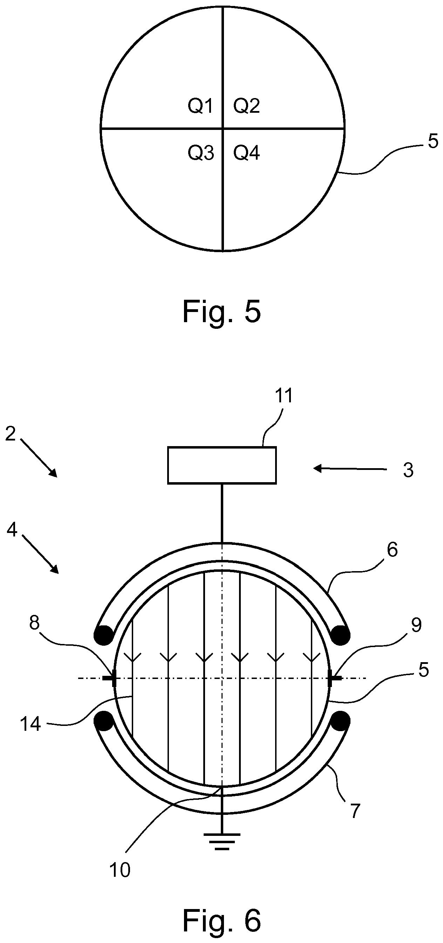

In Fig. 1 ist dargestellt ein erstes Ausführungsbeispiel eines erfindungsgemäßen Verfahrens 1 zur Bestimmung des Strömungsprofils im Messrohr 5 eines magnetisch-induktiven Durchflussmessgeräts 2. Dazu weist das Durchflussmessgerät 2, wie in Fig. 6 dargestellt, einen Messwertumformer 3 und einen Messwertaufnehmer 4 auf. Der Messwertaufnehmer 4 weist ein Messrohr 5, eine erste Spule 6 zur Erzeugung eines ersten Magnetfeldes innerhalb des Messrohrs 5, eine zweite Spule 7 zur Erzeugung eines zweiten Magnetfeldes innerhalb des Messrohrs, eine erste Elektrode 8 und eine zweite Elektrode 9 und eine Referenzelektrode 10 auf. Alternativ zur Referenzelektrode 10 kann ebenfalls ein Erdungsring vorhanden sein. Die erste Elektrode 8 und die zweite Elektrode 9 sind zur Messung einer in dem Fluid auftretenden Spannung diametral an dem Messrohr 5 angeordnet. Die Referenzelektrode 10 ist in einem Winkel von jeweils ca. 90° zu der ersten Elektrode 8 und zu der zweiten Elektrode 9 angeordnet. Der Messwertumformer 4 weist eine Auswerteeinheit 11 auf.

In einem ersten Schritt 12 des in Fig. 1 dargestellten Verfahrens 1, wird nun die erste Spule 6 zur Erzeugung eines ersten Magnetfeldes innerhalb des Messrohrs 5 mit einem ersten Erregerstrom bestromt. Zudem wird die zweiten Spule 7 zur Erzeugung eines zweiten Magnetfeldes mit einem zweiten Erregerstrom bestromt 13.

Im dargestellten Ausführungsbeispiel werden die erste 6 und die zweite Spule 7 derart bestromt, dass das erste Magnetfeld und das zweite Magnetfeld gleichgerichtet sind. Die einzelnen Magnetfelder überlagern sich zu einem in Fig. 6 dargestellten Gesamtmagnetfeld 14.

In einem nächsten Schritt 15 des Verfahrens wird eine erste Spannung $E_1$ an der ersten Elektrode 8 gegen das Referenzpotenzial 10 gemessen und weiterhin wird eine zweite Spannung $E_2$ an der zweiten Elektrode 9 gegen das Referenzpotenzial 10 gemessen 16. Anschließend werden die Spannungsmesswerte $E_1$ und $E_2$ miteinander ver-

$$\left|\frac{E_1}{E_2}\right| \qquad \left|\frac{E_1}{E_2}\right| \neq 1$$

glichen 17. Dazu wird vorliegend der Quotient $\left|\dfrac{E_1}{E_2}\right|$ gebildet. Ist $\left|\dfrac{E_1}{E_2}\right| \neq 1$, unter Berücksichtigung eines Toleranzbereiches, so liegt eine horizontale Asymmetrie zwischen der rechten und der linken Hälfte des Strömungsprofils vor.

Zusätzlich kann aus den gemessenen Spannungswerten $E_1$ und $E_2$ die Strömungsgeschwindigkeit v des Fluids bestimmt werden.

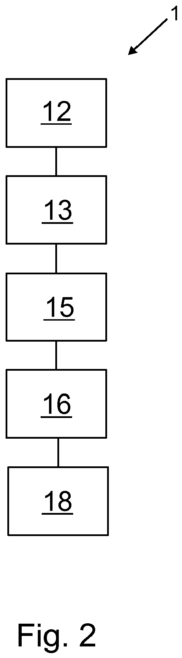

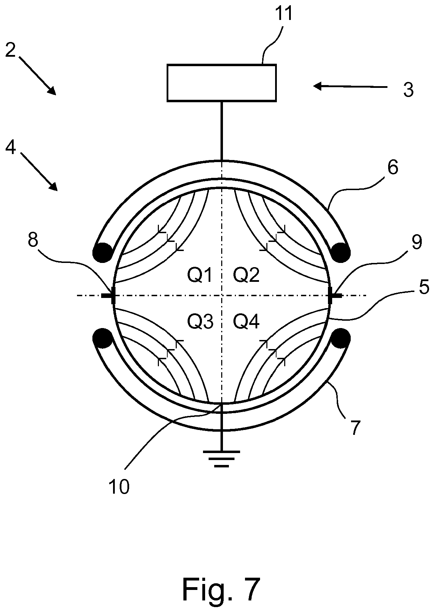

Fig. 2 zeigt ein zweites Ausführungsbeispiel eines Verfahrens 1 zur Bestimmung des Strömungsprofils im Messrohr 5 eines magnetisch-induktiven Durchflussmessgeräts 2, wobei das Durchflussmessgerät 2 entsprechend dem in Fig. 7 dargestellten Durchflussmessgerät ausgestaltet ist. Im Detail ist ebenfalls ein Messwertumformer 3 und ein Messwertaufnehmer 4 vorhanden, wobei der Messwertaufnehmer 4 ein Messrohr 5, eine erste Spule 6 zur Erzeugung eines ersten Magnetfeldes innerhalb des Messrohrs 5, eine zweite Spule 7 zur Erzeugung eines zweiten Magnetfeldes innerhalb des Messrohrs, eine erste Elektrode 8 und eine zweite Elektrode 9, eine Referenzelektrode 10 aufweist. Alternativ zur Referenzelektrode 10 kann ebenfalls ein Erdungsring vorhanden sein. Die erste Elektrode 8 und die zweite Elektrode 9 sind zur Messung einer in dem Fluid auftretenden Spannung diametral an dem Messrohr 5 angeordnet und die Referenzelektrode 10 ist in einem Winkel von jeweils ca. 90° zu der ersten Elektrode 8 und zu der zweiten Elektrode 9 angeordnet. Der Messwertumformer weist eine Steuer- und Auswerteeinheit 11 auf.

In einem ersten Schritt 12 des in Fig. 2 dargestellten Verfahrens 1, wird nun die erste Spule 6 zur Erzeugung eines ersten Magnetfeldes innerhalb des Messrohrs 5 mit einem ersten Erregerstrom bestromt. Zudem wird die zweiten Spule 7 zur Erzeugung eines zweiten Magnetfeldes mit einem zweiten Erregerstrom bestromt 13. Dabei werden die erste 6 und die zweite Spule 7 derart bestromt, dass das erste und das zweite Magnetfeld einander entgegengerichtet sind. Im Ergebnis herrscht innerhalb des Messrohrs 5 das in Fig. 7 dargestellte Magnetfeld. Anschaulich lässt sich der Messrohrquerschnitt in vier Quadranten Q1 bis Q4 einteilen, wobei mittels des in Fig. 2 dargestellten Verfahrens eine vertikale Asymmetrie zwischen Q1 und Q3 bzw. Q2 und Q4 bestimmt werden kann.

In einem nächsten Schritt 15 des Verfahrens wird eine erste Spannung $E_1$ an der ersten Elektrode 8 gegen das Referenzpotenzial 10 gemessen und weiterhin wird eine zweite Spannung $E_2$ an der zweiten Elektrode 9 gegen das Referenzpotenzial 10 gemessen 16.

Anschließend werden zur Bestimmung einer vertikalen Asymmetrie des Strömungsprofils die Spannungen $E_1$ und $E_2$ ausgewertet 18. Ist der Wert der Spannung $E_1 \neq 0$, so ist das Strömungsprofil in den Quadranten Q1 und Q3 der linken Hälfte des Messrohrquerschnitts asymmetrisch. Ist der Wert der Spannung $E_2 \neq 0$, so ist das Strömungsprofil in den Quadranten Q2 und Q4 der rechten Hälfte des Messrohrquerschnitts asymmetrisch.

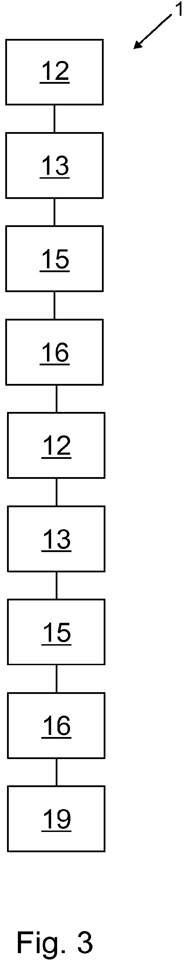

Fig. 3 zeigt ein drittes Ausführungsbeispiel eines Verfahrens 1 zur Bestimmung des Strömungsprofils im Messrohr 5 eines magnetisch-induktiven Durchflussmessgeräts 2, wobei das Durchflussmessgerät 2 einen Messwertumformer 3 und einen Messwertaufnehmer 4 aufweist, wobei der Messwertaufnehmer 4 ein Messrohr 5, eine erste Spule 6 zur Erzeugung eines ersten Magnetfeldes innerhalb des Messrohrs 5, eine zweite Spule 7 zur Erzeugung eines zweiten Magnetfeldes innerhalb des Messrohrs, eine erste Elektrode 8 und eine zweite Elektrode 9, eine Referenzelektrode 10 aufweist. Die erste Elektrode 8 und die zweite Elektrode 9 sind zur Messung einer in dem Fluid auftretenden Spannung diametral an dem Messrohr 5 angeordnet und die Referenzelektrode 10 ist in einem Winkel von jeweils ca. 90° zu der ersten Elektrode 8 und zu der zweiten Elektrode 9 angeordnet. Der Messwertumformer weist eine Steuer- und Auswerteeinheit 11 auf.

In einem ersten Schritt 12 des in Fig. 3 dargestellten Verfahrens 1, wird nun die erste Spule 6 zur Erzeugung eines ersten Magnetfeldes innerhalb des Messrohrs 5 mit einem ersten Erregerstrom bestromt. Zudem wird die zweite Spule 7 zur Erzeugung eines zweiten Magnetfeldes mit einem zweiten Erregerstrom bestromt 13. Dabei werden die erste 6 und die zweite Spule 7 derart bestromt, dass das erste Magnetfeld und das zweite Magnetfeld, wie in Fig. 6 dargestellt, gleichgerichtet sind. Dies entspricht dem ersten Messzustand $M_1$ des Verfahrens 1. Anschließend werden die Spannungen $E_1$ und $E_2$ bestimmt 15,16.

In einem nächsten Schritt 12 wird erneut die erste Spule 6 bestromt und weiterhin wird die zweite Spule 7 bestromt 13, wobei die Spulen 6, 7 nun derart bestromt werden, dass das erste Magnetfeld und das zweite Magnetfeld, wie in Fig. 7 dargestellt gegensinnig ausgerichtet sind. Dies entspricht dem zweiten Messzustand $M_2$ des Verfahrens 1.

Anschließend werden die Spannungen $E_1$ und $E_2$ bestimmt 15, 16. Schließlich erfolgt die Auswertung 19 der Spannungen $E_1$ und $E_2$ des ersten Messzustandes $M_1$ und des zweiten Messzustandes $M_2$ zur qualitativen Bestimmung des Strömungsprofils. Im Rahmen der Auswertung 19 wird zum einen durch den Vergleich der Spannungen $E_1$ und $E_2$ des ersten Messzustandes $M_1$, wie bereits zu Fig. 1 beschrieben, festgestellt, ob eine horizontale Asymmetrie zwischen der linken und der rechten Hälfte des Strömungsprofils vorliegt. Darüber hinaus werden, wie zu Fig. 2 beschrieben, die Spannungen $E_1$ und $E_2$ des zweiten Messzustandes $M_2$ zur Bestimmung einer vertikalen Asymmetrie ausgewertet.

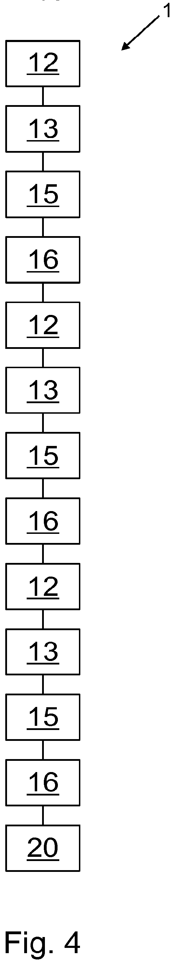

Fig. 4 zeigt ein viertes Ausführungsbeispiel eines Verfahrens 1 zur Bestimmung des Strömungsprofils im Messrohr 5 eines magnetisch-induktiven Durchflussmessgeräts 2. Wie in dem in Fig. 3 dargestellten Ausführungsbeispiel werden zunächst die Spannungen $E_1$ und $E_2$ in einem ersten Messzustand $M_1$, wobei innerhalb des Messrohrs 5 ein gleichgerichtetes Magnetfeld vorliegt und anschließend die Spannungen $E_1$ und $E_2$ in einem zweiten Messzustand $M_2$, wobei innerhalb des Messrohrs 5 ein gegensinniges Magnetfeld vorliegt, bestimmt. In einem anschließenden Schritt 12, 13 werden die erste Spule 6 und die zweite Spule 7 erneut bestromt, sodass innerhalb des Messrohrs 5 ein gegensinniges Magnetfeld vorliegt, wobei jedes Magnetfeld im Vergleich zum zweiten Messzustand invertiert ist. Dies entspricht dem dritten Messzustand $M_3$. Auch in diesem Messzustand werden die Spannung $E_1$ und die Spannung $E_2$ bestimmt 15, 16. In der anschließenden Auswertung 20 wird unter Berücksichtigung der Spannungen $E_1$ und $E_2$ aller drei Messzustände $M_1$, $M_2$ und $M_3$ das Strömungsprofil bestimmt.

Fig. 5 zeigt eine Darstellung des Messrohrquerschnitts des von dem Fluid durchflossenen Messrohrs 5, wobei der Messrohrquerschnitt und damit das Strömungsprofil in vier Quadranten Q1 bis Q4 aufgeteilt ist. Mittels des in Fig. 4 beschriebenen Verfahrens lassen sich nun folgende Strömungsprofiltypen unterscheiden, wobei sich die einzelnen Typen, wie in der folgenden Tabelle aufgelistet, durch eine qualitative Angabe der Geschwindigkeiten in den einzelnen Quadranten unterscheiden:

| Typ | Q1 | Q2 | Q3 | Q4 |
|---|---|---|---|---|
| A | normal | normal | normal | normal |
| B | schnell | schnell | langsam | langsam |
| C | schnell | langsam | schnell | langsam |
| D | schnell | langsam | langsam | langsam |
| E | schnell | langsam | langsam | schnell |
| F | langsam | normal | normal | normal |

Im ersten Messzustand $M_1$ lassen sich die zuvor genannten Strömungsprofiltypen wie folgt unterscheiden:

| Typ | Differential | $|E_1|$ | $|E_2|$ | $\left|\dfrac{E_1}{E_2}\right|$ | $|E_1 - E_2|$ |
|---|---|---|---|---|---|
| A | $E_v$ | $E_v/2$ | $E_v/2$ | 1 | $E_v$ |
| B | $E_v$ | $E_v/2$ | $E_v/2$ | 1 | $E_v$ |
| C | $E_v$ | $E_v/2$ + Offset | $E_v/2$ - Offset | $S_l/S_r$ | $E_v$ |
| D | $E_v$ | $E_v/2$ + Offset | $E_v/2$ - Offset | $S_l/S_r$ | $E_v$ |
| E | $E_v$ | $E_v/2$ | $E_v/2$ | 1 | $E_v$ |
| F | $E_v$ | $E_v/2$ - Offset | $E_v/2$ | $S_l/S_r$ | $E_v$ |

Im zweiten Messzustand ergeben sich für die genannten Strömungsprofiltypen folgende Werte:

| Typ | Differential | $|E_1|$ | $|E_2|$ | $\left|\dfrac{E_1}{E_2}\right|$ | $|E_1 - E_2|$ |
|---|---|---|---|---|---|
| A | 0 | 0 | 0 | 1 | 0 |
| B | Offset*2 | Offset | Offset | $S_o/S_u$ | Offset*2 |
| C | 0 | 0 | 0 | 1 | 0 |
| D | Offset | Offset | 0 | $S_o/S_u$ | Offset |
| E | 0 | Offset | Offset | 1 | 0 |
| F | Offset | Offset | 0 | $S_o/S_u$ | Offset |

Die Bestimmung des Strömungsprofils erfolgt im dargestellten Ausführungsbeispiel durch den folgenden Algorithmus:

• Measure M1

    - quotient_1 = E1/E2

• Measure M2

    - E1_2=E1
    - E2_2 = E2
    - quotient_2 = E1/E2

- sum_2 = E1 + E2
- delta_2 = E1 - E2

- Measure M2 with reversed magnetic field

  - sum_2_rev = E1 + E2

- If (quotient_2 = 1) AND (quotient_1 = 1) then

  - If (sum_2 = sum_2_rev) then FLOWPROFILE A
  - If (sum_2 $\neq$ sum_2_rev) then FLOWPROFILE E

- If not(FLOWPROFILE A) or not(FLOWPROFILE E) and (quotient_1=1) then FLOWPROFILE_B
- If not(FLOWPROFILE A or FLOWPROFILE E or FLOWPROFILE_B) and (quotient_2=1) then FLOWPROFILE_C

Sofern nicht eines der Strömungsprofiltypen A, B, C oder E detektiert wird, so liegt ein Strömungsprofil vor, in dem ein Quadrant eine signifikant höhere oder niedrigere Geschwindigkeit als die übrigen drei Quadranten aufweist (Strömungsprofiltyp D oder F).

Folgender Algorithmus kann beispielsweise zur weiteren Identifizierung des Strömungsprofiltyps eingesetzt werden:

- If (E2_2 = 0) and (E1_2 > 0) and (quotient_1 = "left part") then FLOWPROFILE D_Q 1_fast
- If (E2_2 = 0) and (E1_2 < 0) and (quotient_1 = "left part") then FLOWPROFILE_D_Q3_fast
- If (E1_2 = 0) and (E2_2 > 0) and (quotient_1 = "right part") then FLOWPROFILE_D_Q2_fast
- If (E1_2 = 0) and (E2_2 < 0) and (quotient_1 = "right part") then FLOWPROFILE_D_Q4_fast
- If (E2_2 = 0) and (E1_2 < 0) and (quotient_1 = "right part") then FLOWPROFILE_F_Q1_slow
- If (E2_2 = 0) and (E1_2 > 0) and (quotient_1 = "right part") then FLOWPROFILE_D_Q3_slow
- If (E1_2 = 0) and (E2_2 < 0) and (quotient_1 = "left part") then FLOWPROFILE_D_Q2_slow
- If (E1_2 = 0) and (E2_2 > 0) and (quotient_1 = "left part") then FLOWPROFILE_D_Q4_slow

Im Ergebnis ist ein Verfahren beschrieben und dargestellt, mit dem das Strömungsprofil eines durch ein Messrohr strömenden Fluids ortsaufgelöst bestimmt werden kann. Wird dies bei der Bestimmung der Strömungsgeschwindigkeit bzw. des Durchflusses des Fluids berücksichtigt, so ist die Zuverlässigkeit der Bestimmung der Strömungsgeschwindigkeit bzw. des Durchflusses besonders hoch.

**Bezugszeichen**

1 Verfahren
2 Magnetisch-induktives Durchflussmessgerät
3 Messwertumformer
4 Messwertaufnehmer
5 Messrohr
6 Spule
7 Spule
8 Elektrode
9 Elektrode
10 Referenzelektrode
11 Steuer- und Auswerteeinheit
12 Bestromen der ersten Spule
13 Bestromen der zweiten Spule
14 Magnetfeld
15 Messung der Spannung $E_1$
16 Messung der Spannung $E_2$
17 Vergleich $E_1$ mit $E_2$
18 Auswertung der Spannungen $E_1$ und $E_2$
19 Auswertung der Spannungen $E_1$ und $E_2$ des ersten und des zweiten Messzustandes

20 Auswertung der Spannungen $E_1$ und $E_2$ des ersten und des zweiten und des dritten Messzustandes

**Patentansprüche**

**1.** Verfahren (1) zur Bestimmung des Strömungsprofils im Messrohr (5) eines magnetisch-induktiven Durchflussmessgeräts (2), wobei das Durchflussmessgerät (2) wenigstens einen Messwertumformer (3) und wenigstens einen Messwertaufnehmer (4) aufweist, wobei der Messwertaufnehmer (4) wenigstens ein Messrohr (5), wenigstens eine erste Spule (6) zur Erzeugung eines ersten Magnetfeldes innerhalb des Messrohrs (5), wenigstens eine zweite Spule (7) zur Erzeugung eines zweiten Magnetfeldes innerhalb des Messrohrs (5), wenigstens eine erste Elektrode (8) und wenigstens eine zweite Elektrode (9) aufweist, wobei die erste Elektrode (8) und die zweite Elektrode (9) zur Messung einer in dem Fluid auftretenden Spannung an dem Messrohr (5) angeordnet sind, und wobei der Messwertumformer (3) wenigstens eine Steuer- und Auswerteeinheit (11) aufweist, wobei ein Mittel (10) zum Erzeugen eines Referenzpotenzials vorhanden ist, wobei das Mittel zur Erzeugung des Referenzpotenzials als Referenzelektrode oder als Erdungsring ausgebildet ist, wobei
die erste (8) und die zweite (9) Elektrode diametral derart angeordnet sind, dass die Verbindungslinie der Elektroden senkrecht in Bezug auf ein von der ersten (6) und zweiten (7) Spule erzeugtes gleichsinniges Magnetfeld zur Bestimmung der Strömungsgeschwindigkeit des Fluids angeordnet ist und wobei das Verfahren (1) die folgenden Schritte umfasst:

- Bestromen (12) der ersten Spule (6) zur Erzeugung eines ersten Magnetfeldes mit einem ersten Erregerstrom,
- Bestromen (13) der zweiten Spule (7) zur Erzeugung eines zweiten Magnetfeldes mit einem zweiten Erregerstrom,
- Messung (15) einer ersten Spannung $E_1$ an der ersten Elektrode (8) gegen das Referenzpotenzial,
- Messung (16) einer zweiten Spannung $E_2$ an der zweiten Elektrode (9) gegen das Referenzpotenzial,

**dadurch gekennzeichnet, dass**

das Verfahren die folgenden Schritte umfasst:

- Bestimmung (17, 18, 19, 20) einer vertikalen und/oder horizontalen Asymmetrie des Strömungsprofils aus dem ersten Spannungsmesswert $E_1$ und aus dem zweiten Spannungsmesswert $E_2$,

wobei die in einzelnen Teilbereichen des Messrohrs bzw. des Strömungsquerschnitts abfallende Spannung gesondert gegen das Referenzpotential gemessen wird,
wobei durch Variation des Magnetfeldes innerhalb des Messrohrs bzw. der durch die einzelnen Spulen erzeugten Magnetfelder sich verschiedene Messzustände erzeugen lassen und wobei durch die gesonderte Messung der Spannungen $E_1$ und $E_2$ an jeder Elektrode in den verschiedenen Messzuständen das Strömungsprofil in den einzelnen Teilbereichen durch die Auswirkung unterschiedlicher Magnetfelder charakterisiert wird, und
wobei in der Auswerteeinheit eine Mehrzahl von Strömungsprofilen in Form von verschiedenen Spannungsverhältnissen zwischen der an der ersten Elektrode gemessenen Spannung E1 und der an der zweiten Elektrode gemessenen Spannung E2, unter Berücksichtigung der verschiedenen Messzustände, hinterlegt ist, und
dass die Bestimmung der vertikalen und/oder horizontalen Asymmetrie des Strömungsprofils mittels einer Abfrage bezüglich dieser Spannungsverhältnisse erfolgt.

**2.** Verfahren (1) nach Anspruch 1, **dadurch gekennzeichnet, dass** die erste Spule (6) und die zweite Spule (7) derart bestromt werden, dass das erste Magnetfeld und das zweite Magnetfeld gleichgerichtet sind und dass die Bestimmung (17, 19, 20) der horizontalen Asymmetrie des Strömungsprofils aus dem Vergleich des ersten Spannungsmesswertes $E_1$ und des zweiten Spannungsmesswertes $E_2$ erfolgt.

**3.** Verfahren (1) nach Anspruch 1 oder 2, **dadurch gekennzeichnet, dass** die erste Spule (6) und die zweite Spule (7) alternativ oder zeitlich vor oder nach der Erzeugung von gleichgerichteten Magnetfeldern derart bestromt werden, dass das erste und das zweite Magnetfeld einander entgegengerichtet sind und dass die Bestimmung (18, 19, 20) der vertikalen Asymmetrie des Strömungsprofils aus dem ersten Spannungsmesswert $E_1$ und dem zweiten Spannungsmesswert $E_2$ erfolgt.

**4.** Verfahren (1) nach einem der Ansprüche 1 bis 3, **dadurch gekennzeichnet, dass** in einem ersten Messzustand $M_1$ die erste Spule (6) und die zweite Spule (7) derart bestromt werden, dass das erste und das zweite Magnetfeld gleichgerichtet sind und dass zumindest der erste Spannungsmesswert $E_1$ und der zweite Spannungsmesswert $E_2$ bestimmt werden und dass in einem zweiten Messzustand $M_2$ die erste Spule (6) und die zweite Spule (7) derart bestromt werden, dass das erste und das zweite Magnetfeld einander entgegengerichtet sind und dass zumindest der erste Spannungsmesswert $E_1$ und der zweite Spannungsmesswert $E_2$ bestimmt werden, und dass die Bestimmung (17, 18, 19, 20) der vertikalen und der horizontalen Asymmetrie aus den im ersten Messzustand $M_1$ bestimmten Spannungsmesswerten $E_1$ und $E_2$ und aus den im zweiten Messzustand $M_2$ bestimmten Spannungsmesswerten $E_1$ und $E_2$ erfolgt.

5. Verfahren (1) nach einem der Ansprüche 1 bis 4, dass in einem zusätzlichen Messzustand die erste Spule (6) und die zweite Spule (7) derart bestromt werden, dass das Magnetfeld jeder Spule (6, 7) invertiert wird und dass der erste Spannungsmesswert $E_1$ und der zweite Spannungsmesswert $E_2$ bestimmt werden und dass der erste Spannungsmesswert $E_1$ und der zweite Spannungsmesswert $E_2$ bei der Bestimmung (20) der vertikalen und/oder horizontalen Asymmetrie des Strömungsprofils berücksichtigt werden.

6. Verfahren (1) nach einem der Ansprüche 1 bis 5, **dadurch gekennzeichnet, dass** das Referenzpotenzial ein Massepotential ist.

7. Verfahren (1) nach einem der Ansprüche 1 bis 6, **dadurch gekennzeichnet, dass** aus den bei gleichgerichteten Magnetfeldern gemessenen Spannungsmesswerten $E_1$ und $E_2$ die Strömungsgeschwindigkeit v des Fluids bestimmt wird.

8. Magnetisch-induktives Durchflussmessgerät (2) mit wenigstens einem Messwertumformer (3) und wenigstens einem Messwertaufnehmer (3), wobei der Messwertaufnehmer (4) wenigstens ein Messrohr (5), wenigstens eine erste Spule (6) zur Erzeugung eines ersten Magnetfeldes innerhalb des Messrohrs (5), wenigstens eine zweite Spule (7) zur Erzeugung eines zweiten Magnetfeldes innerhalb des Messrohrs (5), wenigstens eine erste Elektrode (8) und wenigstens eine zweite Elektrode (9) aufweist, wobei die erste Elektrode (8) und die zweite Elektrode (9) zur Messung einer in dem Fluid auftretenden Spannung an dem Messrohr (5) angeordnet sind, und wobei der Messwertumformer (3) wenigstens einer Steuer- und Auswerteeinheit (11) aufweist, wobei

ein Mittel (10) zum Erzeugen eines Referenzpotenzials vorhanden ist, wobei das Mittel zur Erzeugung des Referenzpotenzials als Referenzelektrode oder als Erdungsring ausgebildet ist, wobei
die erste (8) und die zweite (9) Elektrode diametral derart angeordnet sind, dass die Verbindungslinie der Elektroden senkrecht in Bezug auf ein von der ersten (6) und zweiten (7) Spule erzeugtes gleichsinniges Magnetfeld zur Bestimmung der Strömungsgeschwindigkeit des Fluids angeordnet ist, **dadurch gekennzeichnet,**
**dass** die Steuer- und Auswerteeinheit (11) derart ausgestaltet ist, dass sie im Betrieb aus den an den Elektroden (8, 9) gemessenen Spannungsmesswerten $E_1$ und $E_2$, wobei die Spannungsmesswerte $E_1$ und $E_2$ jeweils gegen das Referenzpotenzial gemessen werden, eine vertikale und/oder horizontale Asymmetrie des Strömungsprofils bestimmt,
**dass** die in einzelnen Teilbereichen des Messrohrs bzw. des Strömungsquerschnitts abfallende Spannung gesondert gegen das Referenzpotential gemessen wird,
**dass** durch Variation des Magnetfeldes innerhalb des Messrohrs bzw. der durch die einzelnen Spulen erzeugten Magnetfelder sich verschiedene Messzustände erzeugen lassen und dass durch die gesonderte Messung der Spannungen $E_1$ und $E_2$ an jeder Elektrode in den verschiedenen Messzuständen das Strömungsprofil in den einzelnen Teilbereichen durch die Auswirkung unterschiedlicher Magnetfelder charakterisiert wird
und **dass** in der Auswerteeinheit eine Mehrzahl von Strömungsprofilen in Form von verschiedenen Spannungsverhältnissen zwischen der an der ersten Elektrode gemessene Spannung E1 und der an der zweiten Elektrode gemessene Spannung E2, unter Berücksichtigung der verschiedenen Messzustände, hinterlegt ist und
**dass** die Bestimmung der vertikalen und/oder horizontalen Asymmetrie des Strömungsprofils mittels einer Abfrage bezüglich dieser Spannungsverhältnisse erfolgt.

9. Magnetisch-induktives Durchflussmessgerät (2) nach Anspruch 8, **dadurch gekennzeichnet, dass** das Durchflussmessgerät (2) dazu geeignet ist, im Betrieb ein Verfahren (1) gemäß einem der Ansprüche 1 bis 7 durchzuführen.

10. Verwendung eines magnetisch-induktiven Durchflussmessgeräts (2) zur Bestimmung des Strömungsprofils eines durch ein Messrohr (5) strömenden Fluids, wobei das Durchflussmessgerät (2) wenigstens einen Messwertumformer (3) und wenigstens einen Messwertaufnehmer (4) aufweist, wobei der Messwertaufnehmer (4) wenigstens ein Messrohr (5), wenigstens eine erste Spule (6) zur Erzeugung eines ersten Magnetfeldes innerhalb des Messrohrs (5), wenigstens eine zweite Spule (7) zur Erzeugung eines zweiten Magnetfeldes innerhalb des Messrohrs (5), wenigstens eine erste Elektrode (8) und wenigstens eine zweite Elektrode (9) aufweist, wobei die erste Elektrode (8) und die zweite Elektrode (9) zur Messung einer in dem Fluid auftretenden Spannung an dem Messrohr (5) angeordnet sind, und wobei der Messwertumformer (3) wenigstens eine Steuer- und Auswerteeinheit (11) aufweist, wobei

ein Mittel (10) zum Erzeugen eines Referenzpotenzials vorhanden ist, wobei das Mittel zur Erzeugung des Referenzpotenzials als Referenzelektrode oder als Erdungsring ausgebildet ist,
wobei die erste (8) und die zweite (9) Elektrode diametral derart angeordnet sind, dass die Verbindungslinie der Elektroden senkrecht in Bezug auf ein von der ersten (6) und zweiten (7) Spule erzeugtes gleichsinniges Magnetfeld zur Bestimmung der Strömungsgeschwindigkeit des Fluids angeordnet ist,
**dadurch gekennzeichnet,**
**dass** die Steuer- und Auswerteeinheit (11) derart ausgestaltet ist, dass sie im Betrieb aus den an den Elektroden (8, 9) gemessenen Spannungsmesswerten $E_1$ und $E_2$ die vertikale und/oder horizontale Asymmetrie des Strömungsprofils bestimmt, wobei die Spannungsmesswerte $E_1$ und $E_2$ jeweils gegen das Referenzpotenzial gemessen werden,
wobei die in einzelnen Teilbereichen des Messrohrs bzw. des Strömungsquerschnitts abfallende Spannung gesondert gegen ein Referenzpotential gemessen wird,
wobei durch Variation des Magnetfeldes innerhalb des Messrohrs bzw. der durch die einzelnen Spulen erzeugten Magnetfelder sich verschiedene Messzustände erzeugen lassen und wobei durch die gesonderte Messung der Spannungen $E_1$ und $E_2$ an jeder Elektrode in den verschiedenen Messzuständen das Strömungsprofil in den einzelnen Teilbereichen durch die Auswirkung unterschiedlicher Magnetfelder charakterisiert wird,
und wobei in der Auswerteeinheit eine Mehrzahl von Strömungsprofilen in Form von verschiedenen Spannungsverhältnissen zwischen der an der ersten Elektrode gemessene Spannung E1 und der an der zweiten Elektrode gemessene Spannung E2, unter Berücksichtigung der verschiedenen Messzustände, hinterlegt ist und
**dass** die Bestimmung der vertikalen und/oder horizontalen Asymmetrie des Strömungsprofils mittels einer Abfrage bezüglich dieser Spannungsverhältnisse erfolgt

## Claims

**1.** Method (1) for determining the flow profile in the measuring tube (5) of a magnetic-inductive flowmeter (2), wherein the flowmeter (2) has at least one measuring transducer (3) and at least one measuring sensor (4), wherein the measuring sensor (4) has at least one measuring tube (5), at least one first coil (6) for generating a first magnetic field within the measuring tube (5), at least one second coil (7) for generating a second magnetic field within the measuring tube (5), at least one first electrode (8) and at least one second electrode (9), wherein the first electrode (8) and the second electrode (9) are arranged on the measuring tube (5) for measuring a voltage occurring in the fluid, and wherein the transducer (3) has at least one control and evaluation unit (11), wherein

a means (10) for generating a reference potential is provided,
wherein the means for generating the reference potential is designed as a reference electrode or as an grounding ring,
wherein the first (8) and second (9) electrodes are arranged diametrically such that the line connecting the electrodes is arranged perpendicularly with respect to a magnetic field generated by the first (6) and second (7) coils in the same direction for determining the flow velocity of the fluid, and wherein the method (1) comprises the following steps:

- supplying (12) the first coil (6) with current to generate a first magnetic field with a first exciting current,
- supplying (13) the second coil (7) with current to generate a second magnetic field with a second exciting current,
- measuring (15) a first voltage $E_1$ at the first electrode (8) compared to the reference potential,
- measuring (16) a second voltage $E_2$ at the second electrode (9) compared to the reference potential,

**characterized in**
**that** the method comprises the following steps:

- determining (17, 18, 19, 20) a vertical and/or horizontal asymmetry of the flow profile from the first measured voltage value $E_1$ and from the second measured voltage value $E_2$,

wherein the voltage drop in individual partial areas of the measuring tube or the flow cross-section is measured separately compared to the reference potential,

wherein different measurement states can be generated by varying the magnetic field within the measuring tube or the magnetic fields generated by the individual coils, and wherein by the separate measurement of the voltages $E_1$ and $E_2$ at each electrode in the different measurement states the flow profile in the individual partial areas is **characterized by** the effect of different magnetic fields, and

wherein a plurality of flow profiles are stored in the evaluation unit in the form of different voltage ratios between the voltage $E_1$ measured at the first electrode and the voltage $E_2$ measured at the second electrode, taking into account the different measurement states, and

that the vertical and/or horizontal asymmetry of the flow profile is determined by means of a query with respect to these voltage ratios.

2. Method (1) according to claim 1, **characterized in that** the first coil (6) and the second coil (7) are supplied with current so that the first magnetic field and the second magnetic field have the same direction and that determining (17, 19, 20) the horizontal asymmetry of the flow profile is carried out using the comparison of the first measured voltage value $E_1$ and the second measured voltage value $E_2$.

3. Method (1) according to claim 1 or 2, **characterized in that** the first coil (6) and the second coil (7) are supplied with current alternately or before or after, in terms of time, generating magnetic fields having the same direction so that the first and the second magnetic field oppose one another and that determining (18, 19, 20) the vertical asymmetry of the flow profile is carried out using the first measured voltage value $E_1$ and the second measured voltage value $E_2$.

4. Method (1) according to any one of claims 1 to 3, **characterized in that** the first coil (6) and the second coil (7) are supplied with current in a first measurement state $M_1$ so that the first and the second magnetic field have the same direction and that at least the first measured voltage value $E_1$ and the second measured voltage value $E_2$ are determined and that the first coil (6) and the second coil (7) are supplied with current in a second measurement state $M_2$ so that the first and the second magnetic field are opposed to one another and that at least the first measured voltage value $E_1$ and the second measured voltage value $E_2$ are determined, and that determining (17, 18, 19, 20) the vertical and horizontal asymmetry is carried out using the measured voltage values E1 and $E_2$ determined in the first measurement state $M_1$ and using the measured voltage values $E_1$ and $E_2$ determined in the second measurement state $M_2$.

5. Method (1) according to any one of claims 1 to 4, **characterized in that** the first coil (6) and the second coil (7) are supplied with current in an additional measurement state so that the magnetic field of each coil (6, 7) is inverted and that the first measured voltage value $E_1$ and the second measured voltage value $E_2$ are determined and the first measured voltage value $E_1$ and the second measured voltage value $E_2$ are taken into account in determining (20) the vertical and/or horizontal asymmetry of the flow profile.

6. Method (1) according to any one of claims 1 to 5, **characterized in that** the reference potential is a mass potential.

7. Method (1) according to any one of claims 1 to 6, **characterized in that** the speed of flow v of the fluid is determined from the measured voltage values $E_1$ and $E_2$ measured in magnetic fields having the same direction.

8. Magnetic-inductive flowmeter (2) with at least one measuring transducer (3) and at least one measuring sensor (3), wherein the measuring sensor (4) has at least one measuring tube (5), at least one first coil (6) for generating a first magnetic field within the measuring tube (5), at least one second coil (7) for generating a second magnetic field within the measuring tube (5), at least one first electrode (8) and at least one second electrode (9), wherein the first electrode (8) and the second electrode (9) are arranged on the measuring tube (5) for measuring a voltage occurring in the fluid, and wherein the measuring transducer (3) comprises at least one control and evaluation unit (11),

wherein a means (10) for generating a reference potential is provided,
wherein the means for generating the reference potential is designed as a reference electrode or as an grounding ring,
wherein the first (8) and the second (9) electrodes are arranged diametrically in such a way that the connecting line of the electrodes is perpendicular with respect to a magnetic field generated by the first (6) and second (7) coils in the same direction for determining the flow velocity of the fluid,
**characterized in**

**that** the control and evaluation unit (11) is designed such that, during operation, it determines a vertical and/or horizontal asymmetry of the flow profile from the measured voltage values $E_1$ and $E_2$ measured at the electrodes (8, 9), wherein the measured voltage values $E_1$ and $E_2$ are each measured with respect to the reference potential, **that** the voltage falling in individual sub-areas of the measuring tube or the flow cross-section is measured separately with respect to the reference potential,

**that** by varying the magnetic field within the measuring tube or the magnetic fields generated by the individual coils, different measurement states can be generated and that by separately measuring the voltages $E_1$ and $E_2$ at each electrode in the different measurement states, the flow profile in the individual sub-areas is **characterized by** the effect of different magnetic fields,

and that a plurality of flow profiles is stored in the evaluation unit in the form of different voltage ratios between the voltage $E_1$ measured at the first electrode and the voltage $E_2$ measured at the second electrode, taking into account the different measurement states, and

that the vertical and/or horizontal asymmetry of the flow profile is determined by means of an inquiry with respect to these voltage ratios.

9. Magnetic-inductive flowmeter (2) according to claim 8, **characterized in that** the flowmeter (2) is suitable for carrying out a method (1) according to any one of claims 1 to 7 during operation.

10. Use of a magnetic-inductive flowmeter (2) for determining the flow profile of a fluid flowing through a measuring tube (5), wherein the magnetic-inductive flowmeter (2) has at least one measuring transducer (3) and at least one measuring sensor (4), wherein the measuring sensor (4) has at least one measuring tube (5), at least one first coil (6) for generating a first magnetic field within the measuring tube (5), at least one second coil (7) for generating a second magnetic field within the measuring tube (5), at least one first electrode (8) and at least one second electrode (9), wherein the first electrode (8) and the second electrode (9) are arranged on the measuring tube (5) for measuring a voltage occurring in the fluid, and wherein the measuring transducer (3) comprises at least one control and evaluation unit (11),

wherein a means (10) for generating a reference potential is provided,
wherein the means for generating the reference potential is designed as a reference electrode or as a grounding ring,
wherein the first (8) and the second (9) electrodes are arranged diametrically in such a way that the connecting line of the electrodes is perpendicular with respect to a magnetic field generated by the first (6) and second (7) coils in the same direction for determining the flow velocity of the fluid,
**characterized in**
**that** the control and evaluation unit (11) is designed such that, during operation, it determines a vertical and/or horizontal asymmetry of the flow profile from the measured voltage values $E_1$ and $E_2$ measured at the electrodes (8, 9), wherein the measured voltage values $E_1$ and $E_2$ are each measured with respect to the reference potential, wherein the voltage falling in individual partial areas of the measuring tube or the flow cross-section is measured separately with respect to the reference potential,
wherein by varying the magnetic field within the measuring tube or the magnetic fields generated by the individual coils, different measurement states can be generated and that by separately measuring the voltages $E_1$ and $E_2$ at each electrode in the different measurement states, the flow profile in the individual partial areas is **characterized by** the effect of different magnetic fields,
and wherein a plurality of flow profiles is stored in the evaluation unit in the form of different voltage ratios between the voltage $E_1$ measured at the first electrode and the voltage $E_2$ measured at the second electrode, taking into account the different measurement states, and
that the determination of the vertical and/or horizontal asymmetry of the flow profile is carried out by means of an inquiry with respect to these voltage ratios.

**Revendications**

1. Procédé (1) de détermination du profil d'écoulement dans le tube de mesure (5) d'un débitmètre magnéto-inductif (2), le débitmètre (2) comportant au moins un convertisseur de valeurs de mesure (3) et au moins un transducteur (4), le transducteur (4) comportant au moins un tube de mesure (5), au moins une première bobine (6) destinée à générer un premier champ magnétique à l'intérieur du tube de mesure (5), au moins une deuxième bobine (7) destinée à générer un deuxième champ magnétique à l'intérieur du tube de mesure (5), au moins une première électrode (8) et au moins une deuxième électrode (9), la première électrode (8) et la deuxième électrode (9) étant disposées sur le tube de mesure (5) pour mesurer une tension apparaissant dans le fluide, et le transducteur (3) comportant au moins une unité de commande et d'évaluation (11), un moyen (10) étant prévu pour générer un potentiel de référence, le moyen de génération du potentiel de référence étant conçu comme une électrode de référence ou comme une bague de mise à la terre, la première électrode (8) et la deuxième électrode (9) étant disposées diamétralement de manière à ce que la ligne de liaison des électrodes soit disposée perpendiculairement à un champ magnétique de même sens généré par la première bobine (6) et la deuxième bobine (7) pour déterminer la vitesse d'écoulement du fluide et le procédé (1) comprenant les étapes suivantes :

- alimenter (12) la première bobine (6) avec un premier courant d'excitation afin de générer un premier champ magnétique,
- alimenter (13) la deuxième bobine (7) avec un deuxième courant d'excitation afin de générer un deuxième champ magnétique,
- mesurer (15) une première tension $E_1$ au niveau de la première électrode (8) par rapport au potentiel de référence,
- mesurer (16) une deuxième tension $E_2$ au niveau de la deuxième électrode (9) par rapport au potentiel de référence,

**caractérisé en ce que** le procédé comprend les étapes suivantes :

- déterminer (17, 18, 19, 20) une asymétrie verticale et/ou une asymétrie horizontale du profil d'écoulement à partir de la première valeur de mesure de tension $E_1$ et de la deuxième valeur de mesure de tension $E_2$,

la tension tombant dans certaines sous-zones du tube de mesure ou de la section transversale d'écoulement étant mesurée séparément par rapport au potentiel de référence, différents états de mesure pouvant être générés par variation du champ magnétique à l'intérieur du tube de mesure ou des champs magnétiques générés par les bobines individuelles et le profil d'écoulement dans les différentes sous-zones dû à l'effet de différents champs magnétiques étant **caractérisé par** la mesure séparée des tensions $E_1$ et $E_2$ sur chaque électrode dans les différents états de mesure, et une pluralité de profils d'écoulement sous la forme de différents rapports de tension entre la tension El mesurée au niveau de la première électrode et la tension E2 mesurée au niveau de la deuxième électrode étant stockée dans l'unité d'évaluation avec prise en compte des différents états de mesure, et en ce que la détermination de l'asymétrie verticale et/ou de l'asymétrie horizontale du profil d'écoulement est effectuée au moyen d'une interrogation concernant ces rapports de tensions.

2. Procédé (1) selon la revendication 1, **caractérisé en ce que** la première bobine (6) et la deuxième bobine (7) sont alimentées de manière à ce que le premier champ magnétique et le deuxième champ magnétique soient de même sens et que la détermination (17, 19, 20) de l'asymétrie horizontale du profil d'écoulement soit effectuée à partir de la comparaison de la première valeur de mesure de tension $E_1$ et de la deuxième valeur de mesure de tension $E_2$.

3. Procédé (1) selon la revendication 1 ou 2, **caractérisé en ce que** la première bobine (6) et la deuxième bobine (7) sont alimentées alternativement ou chronologiquement avant ou après la génération de champs magnétiques de même sens de manière à ce que le premier champ magnétique et le deuxième champ magnétique soient dirigés dans des sens opposés et à ce que la détermination (18, 19, 20) de l'asymétrie verticale du profil d'écoulement soit effectuée à partir de la première valeur de mesure de tension $E_1$ et de la deuxième valeur de mesure de tension $E_2$.

4. Procédé (1) selon l'une des revendications 1 à 3, **caractérisé en ce que**, dans un premier état de mesure $M_1$, la première bobine (6) et la deuxième bobine (7) sont alimentées de manière à ce que le premier champ magnétique et le deuxième champ magnétique soient de même sens et qu'au moins la première valeur de mesure de tension $E_1$ et la deuxième valeur de mesure de tension $E_2$ soient déterminées et **en ce que**, dans un deuxième état de mesure $M_2$, la première bobine (6) et la deuxième bobine (7) sont alimentées de manière à ce que le premier champ magnétique et le deuxième champ magnétique soient de sens opposés et qu'au moins la première valeur de mesure de tension $E_1$ et la deuxième valeur de mesure de tension $E_2$ soient déterminées, et que la détermination (17, 18, 19, 20) de l'asymétrie verticale et de l'asymétrie horizontale soit effectuée à partir des valeurs de mesure de tension $E_1$ et $E_2$ déterminées dans le premier état de mesure $M_1$ et des valeurs de mesure de tension $E_1$ et E2 déterminées dans le deuxième état de mesure $M_2$.

5. Procédé (1) selon l'une des revendications 1 à 4, **caractérisé en ce que**, dans un état de mesure supplémentaire, la première bobine (6) et la deuxième bobine (7) sont alimentées de manière à ce que le champ magnétique de chaque bobine (6, 7) soit inversé et que la première valeur de mesure de tension $E_1$ et la deuxième valeur de mesure de tension $E_2$ soient déterminées et que la première valeur de mesure de tension $E_1$ et la deuxième valeur de mesure de tension $E_2$ soient prises en compte lors de la détermination (20) de l'asymétrie verticale et/ou de l'asymétrie horizontale du profil d'écoulement.

6. Procédé (1) selon l'une des revendications 1 à 5, **caractérisé en ce que** le potentiel de référence est un potentiel de masse.

7. Procédé (1) selon l'une des revendications 1 à 6, **caractérisé en ce que** la vitesse d'écoulement v du fluide est déterminée à partir des valeurs de mesure de tension $E_1$ et $E_2$ mesurées avec des champs magnétiques de même sens.

8. Débitmètre magnéto-inductif (2) comprenant au moins un convertisseur de valeurs de mesure (3) et au moins un transducteur (4), le transducteur (4) comportant au moins un tube de mesure (5), au moins une première bobine (6) destinée à générer un premier champ magnétique à l'intérieur du tube de mesure (5), au moins une deuxième bobine (7) destinée à générer un deuxième champ magnétique à l'intérieur du tube de mesure (5), au moins une première électrode (8) et au moins une deuxième électrode (9), la première électrode (8) et la deuxième électrode (9) étant disposées sur le tube de mesure (5) afin de mesurer une tension apparaissant dans le fluide, et le convertisseur de valeurs de mesure (3) comportant au moins une unité de commande et d'évaluation (11), un moyen (10) étant prévu pour générer un potentiel de référence, le moyen de génération du potentiel de référence étant conçu comme une électrode de référence ou comme une bague de mise à la terre, le première électrode (8) et la deuxième électrode (9) étant disposées diamétralement de manière à ce que la ligne de liaison des électrodes soit disposée perpendiculairement à un champ magnétique de même sens généré par la première bobine (6) et la deuxième bobine (7) afin de déterminer la vitesse d'écoulement du fluide,

   **caractérisé en ce que**

   l'unité de commande et d'évaluation (11) est conçue de manière à déterminer en fonctionnement une asymétrie verticale et/ou une asymétrie horizontale du profil d'écoulement à partir des valeurs de mesure de tension $E_1$ et $E_2$ mesurées au niveau des électrodes (8, 9), les valeurs de mesure de tension $E_1$ et $E_2$ étant chacune mesurées par rapport au potentiel de référence,
   la tension tombant dans des sous-zones individuelles du tube de mesure ou dans la section transversale d'écoulement est mesurée séparément par rapport au potentiel de référence,
   différents états de mesure peuvent être générés par variation du champ magnétique à l'intérieur du tube de mesure ou des champs magnétiques générés par les bobines individuelles et
   le profil d'écoulement dans les sous-zones individuelles dû à l'effet de différents champs magnétiques étant **caractérisé par** la mesure séparée des tensions $E_1$ et $E_2$ sur chaque électrode dans les différents états de mesure, et
   une pluralité de profils d'écoulement sous la forme de différents rapports de tension entre la tension El mesurée au niveau de la première électrode et la tension E2 mesurée au niveau de la deuxième électrode est stockée dans l'unité d'évaluation avec prise en compte des différents états de mesure, et
   la détermination de l'asymétrie verticale et/ou de l'asymétrie horizontale du profil d'écoulement est effectuée au moyen d'une interrogation concernant ces rapports de tensions.

9. Débitmètre magnéto-inductif (2) selon la revendication 8, **caractérisé en ce que** le débitmètre (2) est adapté pour mettre en œuvre en fonctionnement un procédé (1) selon l'une des revendications 1 à 7.

10. Utilisation d'un débitmètre magnéto-inductif (2) pour déterminer le profil d'écoulement d'un fluide qui s'écoule dans un tube de meure (5), le débitmètre (2) comprenant au moins un convertisseur de valeurs de mesure (3) et au moins un transducteur (4), le transducteur (4) comportant au moins un tube de mesure (5), au moins une première bobine (6) destinée à générer un premier champ magnétique à l'intérieur du tube de mesure (5), au moins une deuxième bobine (7) destinée à générer un deuxième champ magnétique à l'intérieur du tube de mesure (5), au moins une première électrode (8) et au moins une deuxième électrode (9), la première électrode (8) et la deuxième électrode (9) étant disposées sur le tube de mesure (5) afin de mesurer une tension apparaissant dans le fluide, et le convertisseur de valeurs de mesure (3) comportant au moins une unité de commande et d'évaluation (11), un moyen (10) étant prévu pour générer un potentiel de référence, le moyen de génération du potentiel de référence étant conçu comme une électrode de référence ou comme une bague de mise à la terre, le première électrode (8) et la deuxième électrode (9) étant disposées diamétralement de manière à ce que la ligne de liaison des électrodes soit disposée perpendiculairement à un champ magnétique de même sens généré par la première bobine (6) et la deuxième bobine (7) afin de déterminer la vitesse d'écoulement du fluide,
**caractérisée en ce que**

l'unité de commande et d'évaluation (11) est conçue de manière à déterminer en fonctionnement une asymétrie verticale et/ou une asymétrie horizontale du profil d'écoulement à partir des valeurs de mesure de tension $E_1$ et $E_2$ mesurées au niveau des électrodes (8, 9), les valeurs de mesure de tension $E_1$ et $E_2$ étant chacune mesurées par rapport au potentiel de référence,

la tension tombant dans des sous-zones individuelles du tube de mesure ou dans la section transversale d'écoulement étant mesurée séparément par rapport au potentiel de référence,

différents états de mesure pouvant être générés par variation du champ magnétique à l'intérieur du tube de mesure ou des champs magnétiques générés par les bobines individuelles et le profil d'écoulement dans les sous-zones individuelles dû à l'effet de différents champs magnétiques étant **caractérisé par** la mesure séparée des tensions $E_1$ et $E_2$ sur chaque électrode dans les différents états de mesure,

et une pluralité de profils d'écoulement sous la forme de différents rapports de tension entre la tension El mesurée au niveau de la première électrode et la tension E2 mesurée au niveau de la deuxième électrode étant stockée dans l'unité d'évaluation avec prise en compte des différents états de mesure, et en ce que la détermination de l'asymétrie verticale et/ou de l'asymétrie horizontale du profil d'écoulement est effectuée au moyen d'une interrogation concernant ces rapports de tensions.

Fig. 1

Fig. 2

Fig. 3

1

12

13

15

16

12

13

15

16

12

13

15

16

20

Fig. 4

EP 3 376 176 B1

Fig. 5

Fig. 6

24

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1275940 A2
- EP 0641999 A1
- EP 0770855 A1
- WO 2016142128 A1